# EUROPEAN PATENT APPLICATION

(11) **EP 0 826 930 A2**
(43) Date of publication of application: **04.03.1998**
(21) Application number: 97306787.9
(22) Date of filing: 02.09.1997
(51) Int. Cl.: F24D 13/02

(54) **Heating system**

(30) Priority: 02.09.1996 GB 9618289
(71) Applicant: Warmup PLC, Acton, London W3 8BH (GB)
(72) Inventor: Currie, Michael Gough, Kingston-upon-Thames, Surrey KT2 7QY (GB)
(74) Representative: Piésold, Alexander J.

(57) **Abstract**

An undertile heating kit comprises a heating element 10 of sufficiently small thickness to be laid between a floor and tiling without having to be first embedded in a spacer layer. In use, the heating element is laid out on a floor, taped down, and then tiles are laid on the floor.

## Description

The present invention relates to a heating system, and in particular a heating system designed to be disposed beneath floor tiles.

Conventionally, rooms in houses, offices and the like are heated by providing one or more heat sources, such as open fires and radiators. These heat sources tend to cause substantial heating of their local region, but do not have a great effect on the remainder of the room. Furthermore, a large portion of the heat generated goes straight up as a result of convection, and heats the upper region of the room rather then the lower region where the inhabitants are. Such a method of heating is not particularly efficient.

As an alternative, it is known to provide a heat source underneath the floor, which heat source can cover substantially all of the floor of the room, or selected parts. Since the heat is generated at floor level, it rises to heat the living area in the lower region of the room. When such a system is to be used in a tiled area, such as a conservatory, it is known to embed heating wires in the floor, usually by embedding them in a screed of mortar or concrete which forms the top layer of the floor, or by embedding them in a layer of self-levelling cementitious compound which forms the top layer of the floor. In the case of the screed of mortar or concrete, the heater needs to heat up the embedding material before it can heat the area above, and this requires additional power consumption. Moreover, there are slow reaction times, both in heating up and cooling down. Further, the wires must be of fairly strong construction, with thick solid core resistors, to withstand movement of the floor. However, even with this construction it is possible for movement of the floor to break the wires, whereby the heater becomes useless. Although some of these problems may to a certain extent be mitigated if the heating wires are embedded in a layer of self-levelling cementitious compound, rather than in a mortar or concrete screed, this involves an additional step which would be unnecessary if the floor surface is already even enough for tiling. This adds to the cost and makes installation more difficult and less likely to be undertaken as a "do-it-yourself" job.

It is not possible to simply embed the wires in the layer of adhesive used to secure the tiles, as the heating wires typically have a thickness of greater than 5mm, and conventional tile adhesives cannot be used reliably in a layer thicker than 5mm.

Viewed from one aspect, the invention provides an undertile heating kit comprising a heating element of sufficiently small thickness to be laid between a floor and tiling without having to be first embedded in a spacer layer.

Viewed from another aspect, the invention provides an undertile heater made using a kit as defined herein.

Viewed from another aspect, the invention provides a method of installing an undertile heater, comprising laying a heating element on a floor and laying tiling on the floor, without first embedding the heating element in a spacer layer.

Such an arrangement avoids the requirement in known systems to use a screed or other extra layer to take up the thickness of the heating element before tiles can be laid. The heater is thus easy to install and when in use can provide quick reaction times. In cases where the existing floor is so uneven that a self-levelling layer needs to be applied in any event, the arrangement of the invention can still be used, and is thus of more universal applicability than the known systems.

The thickness of the heating element is preferably less than 5mm, more preferably less than 4mm, still more preferably less than 3mm, and most preferably less than 2mm. The use of a heating element having a thickness of less than 5mm is inventive in its own right and viewed from another aspect, therefore, the invention provides an undertile heating kit comprising a heating element having a thickness of less than 5mm.

The heating element is preferably in the form of an unsupported length. This enables a user to lay the heating element out to a desired configuration rather than the layout being fixed in advance. Thus the configuration can be chosen to fit floor areas of different shapes, giving the user some freedom of choice in the shape of the heater in plan view. The provision of the heating element as an unsupported length also enables the spacing between laterally adjacent portions of the heating element to be chosen when the heating element is laid out and not fixed in advance, giving the user additional freedom to fit the heater to a particular floor shape. These benefits would not be available in the case of a heating element supported in a fixed layout on a web in the form of a net or the like.

The heating element preferably comprises an earth shield. This may take the form of a conductive tube in which a heating conductor is received. The tube may be formed of braided wires. At least one insulating layer, for example of PVC, is preferably provided between the heating conductor and the earth shield. In the event that the heating conductor overheats this melts the insulating material causing the two conductive components to make contact. This is turn will cause a safety cut-out to trip or a fuse to blow, thereby providing a safety feature. As well as providing electrical protection, the earth shield can provide the heating conductor with mechanical protection, so that the heating element can withstand a certain amount of mechanical abuse during installation.

The feature of the earth shield is considered to be inventive in its own right, and viewed from another aspect, the invention provides an undertile heating kit comprising a heating element to be laid between a floor and tiling, the heating element having an earth shield.

The heating element may have one or more heating conductors extending axially. Preferably, however at least one helically wound heating conductor is provided. This renders the heating conductor rather flexible, enabling the heating element to adapt readily to floor movements. The heating conductor is preferably helically wound round a core. An example of a material suitable to form the core is rayon, as this has good flexibility.

The heating element preferably has an outer insulating layer. This can protect it from ingress of water of the effects of chemicals in the floor. The outer layer may for example be made of a latex neoprene compound.

The kit may be provided with a thermostat to control heat output. This may be responsive to room temperature, but preferably a floor probe is provided. This can be located adjacent to the heating element, for example at a spacing of 20-25mm.

A floor primer is preferably included in the kit to assist securing of the heating element. This may be suitable for application to e.g. a wooden (chipboard) or concrete floor. One possible floor primer comprises a latex neoprene compound. The primer will generally be applied to the floor before laying the heating element on the floor. Primer may be applied after laying the heating element on the floor.

The heating element may be secured in place prior to tiling by suitable fixing means, such as adhesive. Preferably, however, the kit comprises a tape to secure the heating element. This is a convenient way of maintaining the proper position of the heating element during tiling. In a preferred method, adhesive tape is placed over the heating element and then tiles are adhesively installed over the taped heating element and the floor. If a floor primer is used, this is applied and allowed to dry before the tape is adhered thereto.

The feature of taping the heating element to the floor is considered to be inventive in its own right, and thus viewed from another aspect, the invention provides an undertile heating kit comprising a heating element to be laid between a floor and tiling, and a tape to secure the heating element to the floor.

Further, viewed from another aspect, the invention provides a method of installing an undertile heater, comprising laying a heating element on a floor, taping the heating element to the floor, and laying tiling on the floor.

Preferably, the tape is of sufficient length to cover substantially the full length of the heating element.

A user of the kit will normally be provided with instructions as to the laying out of the heating element. A length of heating element is preferably arranged on the floor as a plurality of adjacent portions. In a preferred embodiment, the portions are spaced at 50mm intervals, but other spacings are possible depending on requirements. With larger spacings, such as 100mm, the heater may not require a thermostat, as it can be left switched on to provide as continuous gentle heat to take the chill off the tiling. The kit can include spacer means to assist a user in achieving a desired spacing of adjacent portions of the heating element. For example, if the heating element is to be laid out in a generally rectangular configuration made up of a plurality of adjacent, parallel portions, then suitable spacer means can be provided at the opposite ends of the portions. The spacer means could be substantially rigid or it could be flexible, such as a tape or the like.

The spacer means could be in the form of a sheet which is laid on the floor to show where the portions of the heating element should be positioned. Fixing elements such as tacks or nails can then be fixed to the floor in accordance with positions identified on the sheet, which can then be removed, e.g. by being torn away, leaving the fixing elements in place as a guide for the positioning of the heating element portions. The fixing elements can in turn be removed after the heating element has been laid.

In an alternative system, the spacing of adjacent portions of the heating element may simply be marked on the floor. The heating element may then be taped to the floor in accordance with the marked spacings. Initially short tape portions may be used to allow for final adjustment of the layout, and then the entire length of the heating element may be taped down. If the heating element is laid out in a serpentine array, the short tape portions may be used at the ends of the longitudinal runs.

A sizing guide may be provided to assist the user in determining the spacing of adjacent portions of the heating element for the particular heater supplied and the area to be covered. For example, for a 400W heater having a heating element of length 32m which is to be placed in a rectangular room with a plan area of 2.5m², the recommended spacing of adjacent heating element portions is 60mm, with the outermost portions being spaced inwardly from the perimeter of the room by a distance of 70mm. If the plan area is 4.2m², then the spacing figure is 90mm and the perimeter distance is 140mm.

Taking another example, for a 800W heater having a heating element length of 64m which is to be placed in a rectangular room with a plan area of 4.4m², the spacing figure is 60mm and the perimeter distance is 40mm. If the plan area is 6.8m², then the spacing figure is 90mm and the perimeter distance is 60mm.

It will be appreciated that the above are just a few examples of preferred heater layouts and that many variations are possible depending on the power of the heater, the length of the heating element, the required heat output per unit area, the shape of the room etc. It should also be noted that for larger areas more than one heater may be installed.

A preferred embodiment of the invention will now be described by way of example only and with reference to the accompanying drawings, in which:
Figure 1 is a partially exploded view of a heating element used in the heater and heating kit of the present invention; and
Figure 2 is a schematic plan view of the heater as installed but before tiling.

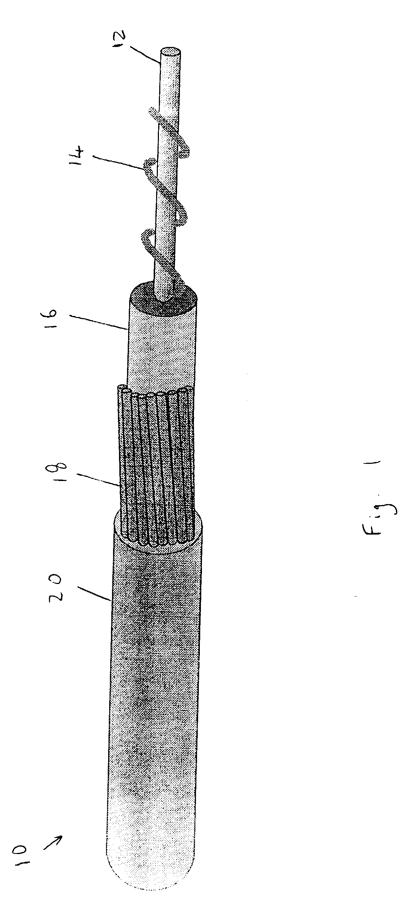

The heating element 10 is shown in Figure 1. It comprises a flexible rayon core 12, around which a heating conductor 14 is helically wound. The helical winding allows the element to stretch without breaking the heating conductor. The heating conductor and the core are covered by a layer 16 of insulator such as PVC. The insulator is surrounded by a meshed earth shield 18, and the earth shield has a protective coating 20, for example made of latex neoprene, to prevent chemical attack. The overall diameter of the element 10 is around 2mm, but can vary according to the power required. For example, a 250W heating element will have a thickness of around 1.7mm, while a 1kW heating element will be around 2.6mm thick.

The earth shield 18 and the coating 20 help to protect the element 10 from mechanical damage prior to and during installation. In the event of the element overheating, the insulator 16 between the conductor 14 and the earth shield 18 will melt, and the conductor 14 will make contact with the earth shield 18. As a result, a fuse provided elsewhere in the heater will blow, preventing further current supply to the heater and reducing the risk of fire.

Installation of the heating system is as follows. Firstly, the floor is cleaned to remove dust, dirt, grease and so on. A coating of neoprene latex primer is then applied. The purpose of the primer is to prepare the floor for attachment of the heating element. For an absorbent floor, such as concrete, it is advantageous for the primer to penetrate into the upper region of the floor, to ensure that the heating element is properly secured. This can be achieved by diluting the primer comprising latex to which neoprene and water have been added. The primer is then allowed to dry.

Once dry, spacer bars are laid on the floor and attached to the primer layer with adhesive tape. The spacer bars are formed from metal strips having a number of lugs positioned at intervals along their length, and can for example be made by cutting metal mesh. Normally, two bars will be laid at the opposite ends of the room in which the heater is to be installed.

The heating element is then strung between the spacer bars. Because there are a number of lugs on the bars a preset intervals, it is possible to vary the spacing of the elements. For example, the element could be led from the first lug on the first bar to the first lug on the second bar, then to the second lug on the first bar, then to the second lug on the second bar, and so on. Alternatively, lugs could be omitted to widen the spacing. With lugs spaced at 25mm intervals, spacings of 25mm, 50mm, 75mm and 100mm can be used. The spacing between the adjacent portions of the heating element can be varied in this way, to give differing heat outputs per unit floor area.

The heating element is then secured to the primer layer by means of adhesive tape. The tape can be laid along the entire length of the element, which provides further protection for the element. Once the element is secured, the spacer bars can be removed. As it is necessary for the tape holding the bars on to the primer layer to be removed, it is preferred that the primer has penetrated into the floor, as this helps to prevent delamination of the primer layer.

A further option for positioning the heating element is to provide a paper template on which is drawn or printed the pattern of the element, or at least the bends in the element. The user then hammers nails or similar into the floor at the bend points, removes the template, and strings the heating element between the nails. Once the element is positioned, it is taped down as before, with the tape preferably covering the entire length of the element. The nails can then be removed.

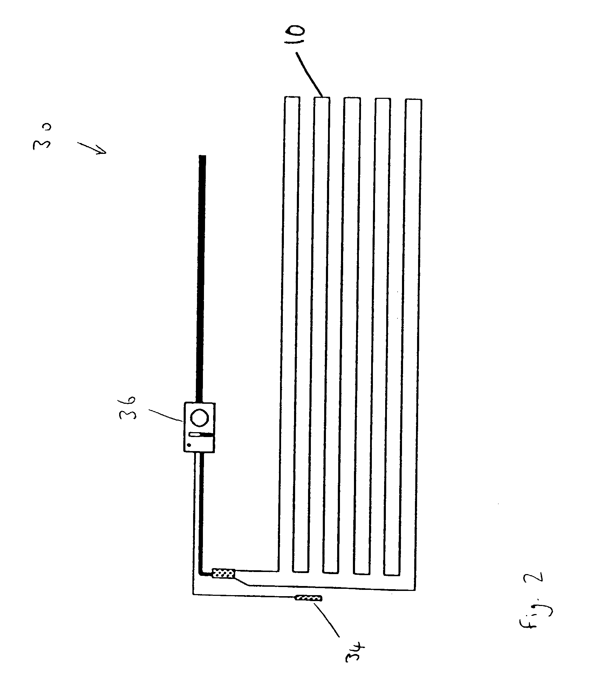

A further, and currently preferred, method of laying out the heater element involves the use of a writing implement, such as a marker pen. Initially the perimeter shape of the heater area is marked out. This may for example be rectangular as shown in Fig. 2 or may have another shape. The spacings between adjacent portions of the heating element are then marked along two opposite sides of the e.g. rectangle. The heating element is then laid out on the floor following the markings, in a serpentine configuration such as that shown in Fig. 2. Initially the heating element is taped down by short strips of adhesive tape only at the regions where it changes direction. This allows for adjustments in spacing once the laying out is completed or nearly completed, to ensure even coverage of the area to be heated. To facilitate such adjustments, about 75% of the heating element may be laid out from the starting point and then the remaining 25% may be laid out working in reverse from the end point, i.e. starting from the end point and working backwards to the last point at which the element was taped down.

Once the overall layout is satisfactory, the entire length of the heating element is taped to the floor. The element is preferably located in the centre of the tape to give maximum protection from the user's trowel at the time of laying the tiles.

Once the heating element is secured to the floor, a floor probe and a thermostatic controller may be fitted, to control the operation of the heater. Figure 2 is a schematic plan view showing the heater 30 at this stage in the installation. As can be seen, the heating element 10 has a convoluted shape, which allows generally even coverage of the floor area. A floor probe 34, for determining the temperature of the floor, is connected to a thermostatic controller 36, which in turn controls the power supply to the heater element. The floor probe is laterally spaced from the heating element, for example by 20 to 25mm. It may be just below the tiling or it may be located in the floor, for example by using a chisel to chip a recess in a concrete floor.

A thermostat controller may be not be required, particularly if the element spacing is large and the heat output correspondingly small. For example, if the element spacing is 100mm as discussed above, there is no need for a thermostatic control, and the heater can be left on permanently to take the chill off the tiles.

The heater wire is then connected to a mains supply, via a thermostatic controller if one is provided.

A further layer of primer can be applied at this stage, covering the element and the tape securing it to the floor. This ensures a good bond between the tile adhesive, the primer and the floor.

The floor is then tiled. Because of the small diameter of the heating element, it is not necessary to bury the element in a layer of cementitious compound before laying the tiles. Rather, the tiles can be laid on top of the heater in a normal manner using conventional tile adhesive. However, if the floor is uneven, or if there are other reasons, then a layer of cementitious compound can be used.

Although Figure 2 shows an overall heater shape which is rectangular, this is just one example and there are many instances when departure from this shape may be desirable to suit the particular layout of a room. For example, a rectangular shape with "cut-out" portions may be needed to accommodate a lavatory, wash-hand basin or other fixed objects where the floor is not to be tiled.

## Claims

1. An undertile heating kit comprising a heating element of sufficiently small thickness to be laid between a floor and tiling without having to be first embedded in a spacer layer.

2. A kit as claimed in claim 1, wherein the heating element is in the form of an unsupported length.

3. A kit as claimed in claim 1 or 2, wherein the heating element comprises an earth shield.

4. A kit as claimed in claim 1, 2 or 3, comprising a tape to secure the heating element to a floor.

5. An undertile heating kit comprising a heating element to be laid between a floor and tiling, the heating element having an earth shield.

6. An undertile heating kit comprising a heating element to be laid between a floor and tiling, and a tape to secure the heating element to the floor.

7. A kit as claimed in any preceding claim, wherein the thickness of the heating element is less then 5mm, preferably less than 4mm, more preferably less than 3mm, and most preferably less than 2mm.

8. A kit as claimed in any preceding claim, wherein the heating element comprises a helically wound heating conductor.

9. A kit as claimed in any preceding claim, comprising a floor primer to assist securing of the heating element to a floor.

10. An undertile heater made using a kit as claimed in any preceding claim.

11. A method of installing an undertile heater, comprising laying a heating element on a floor and laying tiling on the floor, without first embedding the heating element in a spacer layer.

12. A method of installing an undertile heater, comprising laying a heating element on a floor, taping the heating element to the floor, and laying tiling on the floor.

13. A method as claimed in claim 11 or 12, wherein tape is applied to cover substantially the full length of the heating element.

14. A method as claimed in any of claims 11 to 13, comprising spacing adjacent portions of the heating element.
